# EUROPEAN PATENT APPLICATION

(11) **EP 2 221 546 A1**
(43) Date of publication of application: **25.08.2010**
(21) Application number: 09002417.5
(22) Date of filing: 23.02.2009
(51) Int. Cl.: F24D 12/02

(54) **Reidy heat capture unit 2**

(71) Applicant: Reidy, Neil, Castlebridge Wexford (IE)
(72) Inventor: Reidy, Neil, Castlebridge Wexford (IE)

(57) **Abstract**

The exhaust from central heating boilers and hot water boilers consist of hot gases which are fed directly to a chimney. The average temperature of these gases exceeds 100 oC.

The heat energy of these gases is not channelled back to the boiler and therefore do not reduce fuel consumption.

The Reidy Heat Capture Unit 2 (RHCU2) extracts this heat energy and feeds it back to the boiler.

## Description

### Abstract

The exhaust from central heating boilers and hot water boilers consist of hot gases which are fed directly to a chimney. The average temperature of these gases exceeds 100 oC.

The heat energy of these gases is not channelled back to the boiler and therefore do not reduce fuel consumption.

The Reidy Heat Capture Unit 2 (RHCU2) extracts this heat energy and feeds it back to the boiler.

### Overview

The Reidy Heat Capture Unit 2 (RHCU2) captures a large amount of the heat energy from exhaust gases and feeds this back to the boiler. This provides for much better fuel efficiency and minimizes heat loss. The aim of the RHCU2 is to extract as much heat as possible which may be contained in the exhaust gases.

For this to occur more than one RHCU2 unit can be used as they can be stacked and bridged to provide maximum heat extraction.

Once this happens the exhaust gases will cool and condense into liquid. This liquid will be captured in the condensation trap at the bottom of the exhaust pipe. From there the liquid will be drained to the household sewage connection. This has obvious positive ramifications for the environment.

### Description

The RHCU2 will have a number of perforated metal disks fitted to the inner of a metal pipe carrier assembly. This is to facilitate heat capture and transfer from exhaust gases to water circulating in the pipe carrier assembly.

The RHCU22 fits between the boiler's exhaust gas outlet and the domestic chimney. It is enclosed in double walled insulation to ensure as much heat as possible is captured.

### Applications

The RHCU22 has been designed to be used as an add on heat extraction unit which extracts heat from hot exhaust gases.

Applications include all boilers which provide heat for central heating systems and or hot water. The fuel used by the boiler is irrelevant to the workings of the RHCU2.

The RHCU2 has been designed to work with single function (heating or hot water only) and dual function (heating and hot water) boilers.

The RHCU2 will be manufactured to fit most common boiler exhaust pipe dimensions.

### Choice of Materials

Any ductile metal which is a good conductor of heat and resists corrosion can be used.

The thickness of the disks should not exceed the diameter of the carrier pipe.

The metal parts (perforated disks, carrier assembly, interconnecting rods) should be made from metals which have the following properties:
1. Withstand high temperatures
2. Withstand rapid temperature swings
3. Good conductors of heat
4. Withstand fatigue caused by temperature changes
5. Withstand corrosion

The insulating material must be:
1. Capable of withstanding temperatures of up to 200 oC or more if required.
2. Fire resistant

### Parts List

Metal pipe carrier assembly

2 Perforated metal disks

Interconnecting support rods

130 mm insulated metal pipe housing with condensation trap and inlet for boiler exhaust gas

### Please Note:

Dimensions of carrier and disks are such so as to have a diameter of 128 mm.
Number of perforated disks used depends upon available heat to be recovered.
Carrier assembly height will star from 100 mm
Specifications can change so as to allow improvements in the RHCU2

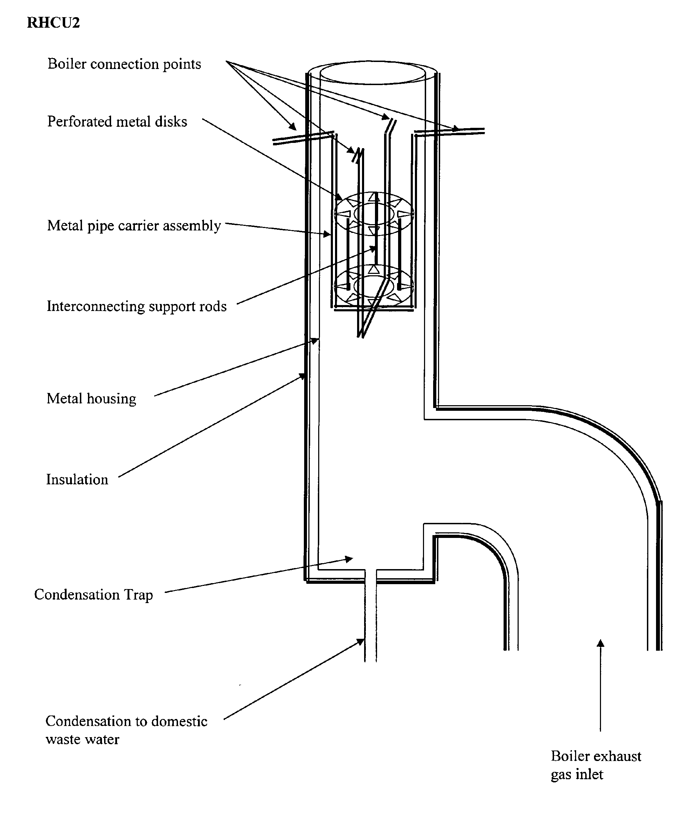

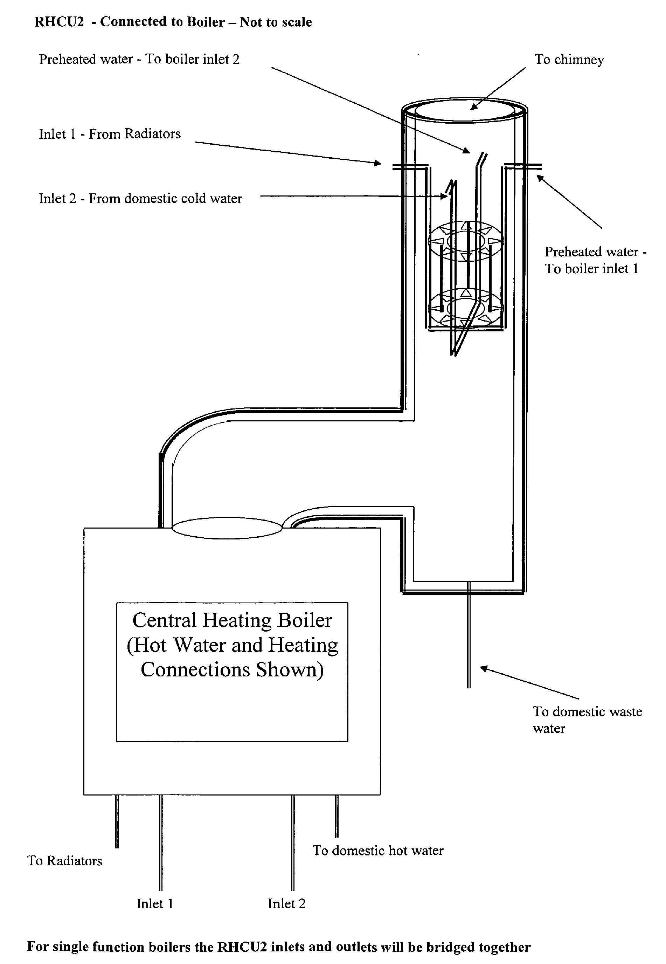

## Claims

1. I hereby claim a patent for RHCU2 bearing application no 09002417.5.

2. The RHCU2 represents a breakthrough in application of novel technology to capture heat from exhaust gases and increase boiler efficiency by releasing the captured head back into the boiler and at the same time reducing exhaust gases released to the atmosphere.

3. Correct application of the RHCU2 unit will result in exhaust gases condensing to liquid This condensate will then be released into the sewage system.

4. Apart from the increases in boiler efficiency there is a positive impact on the environment as less exhaust gas will be released into the atmosphere.

5. The RHCU2 will be manufactured to be retrofitted to existing boilers as well as an add on for new boilers. It is fuel independent. It will be supplied with clear instructions and in kit form so that it can be installed either by anyone interested in DIY or a trained boiler technician.

6. The aim is to make it cost effective and easy to install so that it will find immediate widespread use and contribute to lower fuel consumption as well as lowering air pollution.
